# EUROPÄISCHE PATENTANMELDUNG

(11) **EP 2 960 565 A1**
(43) Veröffentlichungstag der Anmeldung: **30.12.2015**
(21) Anmeldenummer: 15450026.8
(22) Anmeldetag: 25.06.2015
(51) Int. Cl.: F16L 53/00, C02F 1/00, F16L 3/10

(54) **EINRICHTUNG ZUR BEHANDLUNG VON FLÜSSIGKEITEN**

(30) Priorität: 27.06.2014 AT 5112014
(71) Anmelder: Günter Gasser GmbH, 6973 Höchst (Vgb.) (AT)
(72) Erfinder: Gasser, Günter, 6973 Höchst (Vbg.) (AT)
(74) Vertreter: Beer & Partner Patentanwälte KG

(57) **Zusammenfassung**

Einrichtung zur Behandlung von Flüssigkeiten, insbesondere Wasser, durch ein Medium, durch welches die Flüssigkeit in ihrer Struktur, Qualität usw. beeinflusst wird, bestehend aus einem Rohrstück (1), welches eine Leitung (10), durch welche die Flüssigkeit hindurch strömt, vollständig umschließt und in deren Mantelfläche sich das die Flüssigkeit beeinflussende Medium (3) befindet. Dabei besteht das Rohrstück (1) im Querschnitt aus mindestens zwei teilringförmigen Teilstücken (11, 12), welche an den aneinander befindlichen Anlageflächen (11a, 11b, 12a, 12b) mit einander zugeordneten Riegelelementen (41 bis 48) ausgebildet sind, mittels welcher sie zu dem die Leitung (10) umgebenden Rohrstück (1) verbindbar sind.

## Beschreibung

Die gegenständliche Erfindung betrifft eine Einrichtung zur Behandlung von Flüssigkeiten, insbesondere von Wasser, durch ein Medium, durch welches die Flüssigkeit in ihrer Struktur, Qualität usw. beeinflusst wird, bestehend aus einem Rohrstück, welches eine Leitung, durch welche die Flüssigkeit hindurch strömt, vollständig umschließt und in deren Mantelfläche sich das die Flüssigkeit beeinflussende Medium befindet.

Es ist bekannt, dass die Eigenschaften von Wasser dadurch verändert werden können, dass es an einem dieses beeinflussende Medium vorbeigeleitet wird. Hierfür ist es weiters bekannt, Leitungsrohre, durch welche das Wasser hindurchströmt, mit einem Rohrstück zu umschließen, in dessen Mantelfläche sich mindestens ein Medium befindet, durch welches die Eigenschaften des Wassers verändert werden. Hierfür ist es auch bekannt, dieses Rohrstück in zwei Halbschalen zu unterteilen, welche um das Leitungsrohr herum angeordnet und hierauf miteinander verbunden werden.

Hierbei besteht jedoch das Problem, dass Leitungsrohre für Wasser oftmals öffentlich zugänglich sind, weswegen die an diesen befindlichen derartigen Einrichtungen unbefugt abmontiert und entwendet werden können.

Dieses Problem kann dadurch gelöst werden, dass das betreffende Leitungsrohr aufgetrennt wird, worauf ein in sich geschlossenes Rohrstück, in welchem sich mindestens ein Medium befindet, auf dieses Leitungsrohr aufgeschoben wird und dass hierauf das Leitungsrohr wieder verbunden wird. Diese Vorgangsweise bedingt jedoch sehr aufwendige Montagearbeiten.

Der gegenständlichen Erfindung liegt somit die Aufgabe zugrunde, eine Einrichtung zu schaffen, welche auf ein durchgehendes Leitungsrohr in einfacher Weise aufgebracht werden kann, welches jedoch dagegen gesichert ist, in unbefugter Weise entfernt zu werden. Dies wird erfindungsgemäß dadurch erzielt, dass das Rohrstück im Querschnitt aus mindestens zwei teilringförmigen Teilstücken besteht, welche an den aneinander befindlichen Anlageflächen mit einander zugeordneten Riegelelementen ausgebildet sind, mittels welcher sie zu dem die Leitung umgebenden Rohrstück verbindbar sind. Vorzugsweise sind die Teilstücke miteinander verrastbar. Weiters besteht vorzugsweise das Rohrstück aus zwei im Querschnitt halbkreisringförmigen Teilstücken.

Gemäß einer bevorzugten Ausführungsform sind die einander zugeordneten Anlageflächen mit einander entsprechenden Nut-Feder-Elementen ausgebildet, längs welcher die Teilstücke in axialer Richtung des Rohrstückes gegeneinander verschiebbar sind und dadurch aneinander befestigbar sind. Dabei können die Federelemente als abgewinkelte Leisten ausgebildet sein und können die Nutelemente als seitlich hinterschnittene Nuten ausgebildet sein.

Vorzugsweise ist mindestens ein Nutelement mit einem quer zur Nut ausgerichteten Anschlagbolzen od.dgl. ausgebildet, welcher für das zugeordnete Federelement bei dessen Verschiebung längs der Nut einen Anschlag bildet. Weiters ist vorzugsweise mindestens ein Federelement mit einem quer zu diesem ausgerichteten Rastbolzen od.dgl. ausgebildet und ist das zugeordnete Nutelement mit einer Rastkerbe ausgebildet, in welcher der Rastbolzen od.dgl. des Federelementes verrastbar ist. Dabei kann sich die im Nutelement befindliche Rastkerbe in einem Steg befinden, welcher durch eine neben diesem befindliche Aussparung elastisch verstellbar ist.

Nach einer bevorzugten Ausführungsform ist die eine Anlagefläche mit zwei voneinander in axialer Richtung im Abstand befindlichen Federelementen ausgebildet und ist die andere Anlagefläche mit zwei voneinander in axialer Richtung im Abstand befindlichen Nutelementen ausgebildet. Dabei ist vorzugsweise mindestens eines der Federelemente mit einem zu diesem quer ausgerichteten Rastbolzen od.dgl. versehen und ist mindestens eines der Nutelemente mit einer diesem Rastbolzen zugeordneten Rastkerbe sowie das andere mindestens eine weitere Nutelement mit einem Anschlagbolzen od.dgl. versehen.

Der Gegenstand der Erfindung ist nachstehend anhand eines in der Zeichnung dargestellten Ausführungsbeispiels näher erläutert. Es zeigen:
- FIG. 1: eine erfindungsgemäße Einrichtung, welche auf ein Leitungsrohr für Wasser aufgesetzt ist, in axonometrischer Darstellung,
- FIG.1A: den Querschnitt durch die Einrichtung gemäß der Ebene A-A der FIG.1,
- FIG.2, FIG.2A: zwei Ausführungsformen eines Abstandhalters, jeweils in axonometrischer Darstellung, und
- FIG.3: zwei halbkreisringförmige Teilstücke der Einrichtung nach FIG.1 mit einem Leitungsrohr und mit zwei Abstandhaltern, in auseinander gezogener, axonometrischer Darstellung.

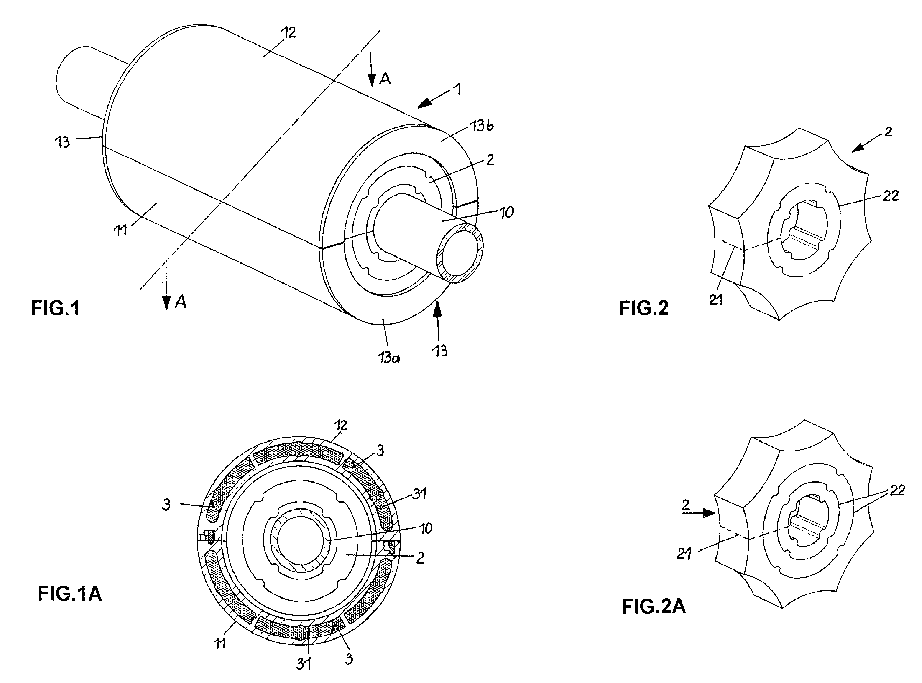

In FIG.1 ist eine erfindungsgemäße Einrichtung dargestellt, welche aus einem Rohrstück 1 besteht, von welchem ein Leitungsrohr 10 für Wasser umschlossen ist. Das Rohrstück 1 besteht aus zwei teilkreisringförmigen Teilstücken 11 und 12, nämlich zwei hohlzylindrischen Halbschalen, deren Mantelflächen mit Hohlräumen ausgebildet sind, in welchen sich mindestens ein Medium befindet, durch welches das durch das Leitungsrohr 10 hindurch strömende Wasser in seinen Eigenschaften, insbesondere in der Qualität, verändert wird. Die beiden Teilstücke 11 und 12 sind an den aneinander liegenden Anlageflächen mit einander zugeordneten Riegelelementen und Rastelementen ausgebildet, mittels welcher sie aneinander so befestigt sind, dass deren Trennung voneinander nicht oder nur schwer möglich ist.

Zwischen dem Rohrstück 1, dessen Innendurchmesser größer ist als der Außendurchmesser des Leitungsrohres 10, befinden sich mindestens zwei Abstandhalter 2, durch welche das Leitungsrohr 10 im Rohrstück 1 gehalten ist. An seinen beiden Stirnflächen ist das doppelwandige Rohrstück 1 mit ringförmigen Abdeckungen 13 ausgebildet, durch welche die in der Mantelfläche des Rohrstückes 1 befindlichen Hohlräume abgeschlossen sind. Auch die ringförmigen Abdeckungen 13 sind jeweils in zwei Hälften 13a und 13b unterteilt.

Aus FIG.1A ist ersichtlich, dass die beiden Teilstücke 11 und 12 doppelwandig ausgebildet sind, wodurch sich in diesen Hohlräume 3 befinden. In diese Hohlräume 3 ist ein Medium 31 eingebracht, durch welches das das Leitungsrohr 10 durchströmende Wasser beeinflusst wird. Die Hohlräume 3 sind durch die Teile 13a und 13b der Abdeckringe 13 verschlossen, wobei diese Teile 13a und 13b mit den Teilstücken 11 und 12 verrastet bzw. verklebt sind.

Wie dies aus den FIG.2 und FIG.2A ersichtlich ist, sind die ringförmig ausgebildeten Abstandhalter 2 mit einer Trennfläche 21 ausgebildet, längs welcher sie so geöffnet werden können, dass sie auf das Leitungsrohr 10 aufsetzbar sind. Zudem sind sie mit Trennflächen 22 ausgebildet, wodurch ringförmige Teilstücke gebildet sind, welche in einfacher Weise entfernt werden können. Hierdurch kann der lichte Innenquerschnitt der Abstandhalter 2 an Leitungsrohre 10 mit unterschiedlichen Durchmessern angepasst werden, wodurch es ermöglicht ist, bei Leitungsrohren 10 mit unterschiedlichen Durchmessern Rohrstücke 1 mit identischen Dimensionen zu verwenden.

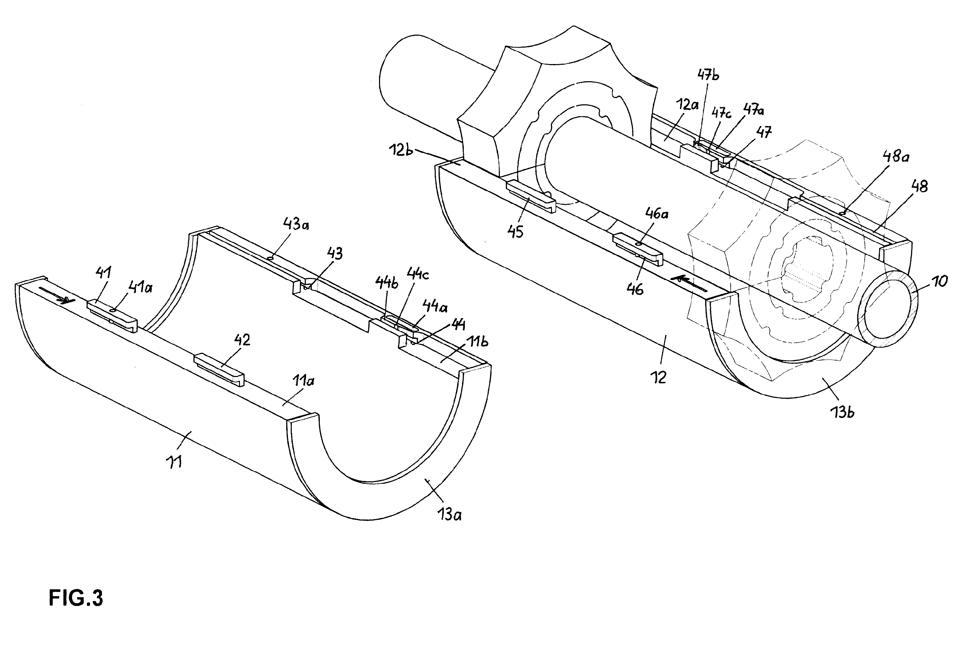

Wie dies aus FIG.3 ersichtlich ist, sind die beiden Teilstücke 11 und 12 an den aneinander zugeordneten Anlageflächen 11a und 11b bzw. 12a und 12b mit Riegelelementen 41 bis 48 ausgebildet, mittels welcher sie miteinander verbunden werden können. Dies wird dadurch bewirkt, dass das Teilstück 11 auf das Teilstück 12, welches sich am Leitungsrohr 10 befindet, aufgesetzt und gegenüber dem Teilstück 12 verschoben wird. Hierdurch werden die beiden Teilstücke 11 und 12 aufgrund der nachstehend erläuterten Ausbildung der Riegelelemente und Rastelemente aneinander befestigt und miteinander verrastet.

Ein erstes Riegelelement, welches sich an einer ersten Anlagefläche 11a des Teilstückes 11 im Abstand von einer der Stirnflächen befindet, ist durch eine nach außen abgewinkelte Leiste 41 gebildet, welche mit einem quer zu dieser ausgerichteten Rastbolzen 41a versehen ist.

Ein zweites Riegelelement, welches sich an der Anlagefläche 11a im Abstand vom ersten Riegelelement befindet, ist gleichfalls durch eine nach außen abgewinkelte Leiste 42 gebildet.

Ein drittes Riegelelement, welches sich an der zweiten Anlagefläche 11b des Teilstückes 11 befindet und sich von einer Stirnfläche zum mittleren Bereich hin erstreckt, ist durch eine nach außen hin hinterschnittene Nut 43 gebildet, welche mit einem quer zu dieser ausgerichteten Anschlagbolzen 43a ausgebildet ist.

An dieser Anlagefläche 11b befindet sich weiters ein viertes Riegelelement, welches als nach außen hin hinterschnittene Nut 44 ausgebildet ist. Zudem befindet sich oberhalb der Hinterschneidung eine Ausnehmung 44a, wobei in dem hierdurch gebildeten Steg 44b eine Rastkerbe 44c vorgesehen ist.

Das zweite Teilstück 12 ist mit den gleichen Riegelelementen wie das erste Teilstück 11 ausgebildet, wobei diese Riegelelemente den Riegelelementen des ersten Teilstückes 11 zugeordnet sind.

Auf einer ersten Anlagefläche 12b befindet sich im Abstand von der Stirnfläche ein erstes Riegelelement, welches durch eine nach außen hin abgewinkelte Leiste 45 gebildet ist. In einem Abstand hiervon befindet sich auf der Anlagefläche 12b ein zweites Riegelelement, welches gleichfalls als nach außen hin abgewinkelte Leiste 46 ausgebildet ist und welches mit einem quer dazu ausgerichteten Rastbolzen 46a versehen ist.

Die zweite Anlagefläche 12a ist mit einem dritten Riegelelement versehen, welches als nach außen hin hinterschnittenen Nut 47 ausgebildet ist. Oberhalb der Hinterschneidung befindet sich eine Ausnehmung 47a, wobei in dem hierdurch gebildeten Steg 47b eine Rastkerbe 47c vorgesehen ist.

Im Abstand von diesem Riegelelement befindet sich auf der Anlagefläche 12a ein viertes Riegelelement in Form einer nach außen hin hinterschnittene Nut 48, welche mit einem quer zu dieser ausgerichteten Anschlagbolzen 48a ausgebildet ist.

Sobald das Teilstück 11 so auf das Teilstück 12 aufgesetzt wird, dass die Anlageflächen 11a und 12a bzw. 11b und 12b aneinander liegen, sind einander die Riegelelemente 41 und 47, 42 und 48, 43 und 45 sowie 44 und 46 zugeordnet.

Zur Befestigung der beiden Teilstücke 11 und 12 miteinander, wobei sie das Leitungsrohr 10 umschließen, wird das Teilstück 11 so an das Teilstück 12 gefügt, dass sich das Riegelelement 42 zwischen den Riegelelementen 47 und 48 befindet und sich das Riegelelement 44 zwischen den Riegelelementen 45 und 46 befindet bzw. die Riegelelemente 41 und 43 sich seitlich außerhalb der Riegelelemente 47 und 45 befinden. Hierauf werden die beiden Teilstücke 11 und 12 in Richtung der auf den Anlageflächen 11a und 11b befindlichen Pfeile so weit gegeneinander verschoben, dass sich deren Stirnflächen in den gleichen Ebenen befinden.

Hierdurch gelangt die abgewinkelte Leiste 41 in die hinterschnittene Nut 47, wobei der Rastbolzen 41a in die Rastkerbe 47c gelangt.

Weiters gelangt die abgewinkelte Leiste 42 in die hinterschnittene Nut 48, wobei der Anschlagbolzen 43a an die diesem zugeordnete Stirnfläche der Leiste 42 zur Anlage kommt, wodurch die gegenseitigen Lagen bestimmt werden.

Weiters gelangt die abgewinkelte Leiste 45 in die hinterschnittene Nut 43, wobei der Anschlagbolzen 43a an die diesem zugeordnete Stirnfläche der Leiste 45 zur Anlage kommt.

Schließlich gelangt die abgewinkelte Leiste 46 in die hinterschnittene Nut 44, wobei der Rastbolzen 46a in die Rastkerbe 44c gelangt.

Durch die Riegelelemente werden die beiden Teilstücke 11 und 12 aneinander befestigt. Durch die Anschlagbolzen 43a und 48a wird die gegenseitige Lage der beiden Teilstücke 11 und 12 bestimmt, wobei die Stirnflächen der beiden Teilstücke 11 und 12 in den gleichen Ebenen liegen, und durch die Rastbolzen 41a und 46a, welche in die Rastkerben 47c und 44c einrasten, werden die beiden Teilstücke 11 und 12 in ihrer gegenseitigen Lage verrastet.

Durch entsprechend dimensionierte Rastelemente können die beiden Teilstücke 11 und 12 nahezu unlösbar aneinander befestigt werden.

In der Folge werden die Abstandhalter 3 auf das Leitungsrohr 10 aufgesetzt und von beiden Seiten in das Rohrstück 1 eingeschoben.

Hierdurch ist das Leitungsrohr 10 von einer Einrichtung, nämlich vom Rohrstück 1, welches ein Medium 3 enthält, durch welches das Wasser in seinen Eigenschaften beeinflusst wird, umschlossen. Diese Einrichtung ist so ausgebildet, dass sie in einfacher Weise auf das Leitungsrohr aufgebracht werden kann, dass sie jedoch aufgrund des Sachverhalts, dass die beiden Teilstücke, aus welchen sie besteht, miteinander verriegelt und verrastet sind, nur schwer oder nicht entfernt werden kann.

## Patentansprüche

1. Einrichtung zur Behandlung von Flüssigkeiten, insbesondere Wasser, durch ein Medium, durch welche die Flüssigkeit in ihrer Struktur, Qualität usw. beeinflusst wird, bestehend aus einem Rohrstück (1), welches eine Leitung (10), durch welche die Flüssigkeit hindurch strömt, vollständig umschließt und in deren Mantelfläche sich das die Flüssigkeit beeinflussende Medium (3) befindet, **dadurch gekennzeichnet, dass** das Rohrstück (1) im Querschnitt aus mindestens zwei teilringförmigen Teilstücken (11, 12) besteht, welche an den aneinander befindlichen Anlageflächen (11a, 11b, 12a, 12b) mit einander zugeordneten Riegelelementen (41 bis 48) ausgebildet sind, mittels welcher sie zu dem die Leitung (10) umgebenden Rohrstück (1) verbindbar sind.

2. Einrichtung nach Patentanspruch 1, **dadurch gekennzeichnet, dass** die teilringförmigen Teilstücke (11, 12) miteinander verrastbar sind.

3. Einrichtung nach einem der Patentansprüche 1 und 2, **dadurch gekennzeichnet, dass** das Rohrstück (1) aus zwei im Querschnitt halbkreisringförmigen Teilstücken (11, 12) besteht.

4. Einrichtung nach einem der Patentansprüche 1 bis 3, **dadurch gekennzeichnet, dass** die einander zugeordneten Anlageflächen (11a, 11b, 12a, 12b) mit einander entsprechenden Nut-Feder-Elementen (41 bis 48) ausgebildet sind, längs welcher die Teilstücke (11, 12) in axialer Richtung des Rohrstückes (1) gegeneinander verschiebbar sind und dadurch aneinander befestigbar bzw. verrastbar sind.

5. Einrichtung nach Patentanspruch 4, **dadurch gekennzeichnet, dass** die Federelemente als abgewinkelte Leisten (41, 42, 45, 46) ausgebildet sind und dass die Nutelemente als seitlich hinterschnittene Nuten (43, 44, 47, 48) ausgebildet sind.

6. Einrichtung nach einem der Patentansprüche 4 und 5, **dadurch gekennzeichnet, dass** mindestens ein Nutelement mit einem quer zur Nut (43, 48) ausgerichteten Anschlagbolzen (43a, 48a) od.dgl. ausgebildet ist, welcher für das zugeordnete Federelement (45, 42) bei dessen Verschiebung längs der Nut (43, 48) einen Anschlag bildet.

7. Einrichtung nach einem der Patentansprüche 4 bis 6, **dadurch gekennzeichnet, dass** zumindest ein Federelement (41, 46) mit einem quer zu diesem ausgerichteten Rastbolzen (41a, 46a) od.dgl. ausgebildet ist und das zugeordnete Nutelement (47, 44) mit einer Rastkerbe (47c, 44c) ausgebildet ist, in welcher der Rastbolzen (41a, 46a) des Federelementes (41, 46) verrastbar ist.

8. Einrichtung nach Patentanspruch 7, **dadurch gekennzeichnet, dass** sich die im Nutelement (47, 44) befindliche Rastkerbe (47c, 44c) in einem Steg (47b, 44b) befindet, welcher durch eine neben diesem befindliche Aussparung (47a, 44a) elastisch verstellbar ist.

9. Einrichtung nach einem der Patentansprüche 1 bis 8, **dadurch gekennzeichnet, dass** die eine Anlagefläche (11a, 12b) mit zwei voneinander in axialer Richtung im Abstand befindlichen Federelementen (41, 42, 45, 46) und die andere Anlagefläche (11b, 12a) mit zwei voneinander in axialer Richtung im Abstand befindlichen Nutelementen (43, 44, 47, 48) ausgebildet ist.

10. Einrichtung nach Patentanspruch 9, **dadurch gekennzeichnet, dass** mindestens eines der Federelemente (41, 46) mit einem zu diesem quer ausgerichteten Rastbolzen (41a, 46a) od.dgl. und mindestens eines der Nutelemente (47, 44) mit einer diesem Rastbolzen (41a, 46a) zugeordneten Rastkerbe (47c, 44c) sowie das andere mindestens eine weitere Nutelement (43, 48) mit einem Anschlagbolzen (43a, 48a) od.dgl. versehen ist.
